# EUROPÄISCHE PATENTSCHRIFT

(11) **EP 0 671 222 B1**
(45) Veröffentlichungstag und Bekanntmachung des Hinweises auf die Patenterteilung: **05.07.2000**
(21) Anmeldenummer: 95102150.0
(22) Anmeldetag: 16.02.1995
(51) Int. Cl.: B07B 1/10, C05F 9/02, B07B 13/16, B07B 9/00

(54) **Absiebvorrichtung für Kompost**
Apparatus for the screening of compost
Dispositif pour tamiser du compost

(30) Priorität: 11.03.1994 DE 4408187
(43) Veröffentlichungstag der Anmeldung: 13.09.1995
(73) Patentinhaber: J. WILLIBALD GMBH Maschinenfabrik, 88639 Wald-Sentenhart (DE)
(72) Erfinder: Willibald, Josef, D-88699 Altheim (DE)
(74) Vertreter: Fürst, Siegfried

(56) Entgegenhaltungen:
- EP-A- 0 186 771
- EP-A- 0 271 608
- DE-B- 2 810 199

## Beschreibung

Die Erfindung betrifft nach dem Oberbegriff des Patentanspruches 1 eine ortsbewegliche oder an andere Geräte bei Bedarf anbaubare Absiebvorrichtung für Kompost und alle rottefähigen organischen Abfallmaterialien.

Es ist bekannt, daß vor allem bei der industriellen Kompostierung solcher Materialien von Zeit zu Zeit ein Umsetzen der Mieten mit möglichst gleichzeitiger Absiebung bereits fertigen Rottegutes erfolgen muß.

Aus dem Stand der Technik ist auch die deutsche Auslegeschrift 28 10 199 bekannt. Hier wird eine Vorrichtung zum Größen-Sortieren von Feldfrüchten, insbesondere Kartoffeln beschrieben. Auf einem endlosen, umlaufenden Siebband wird in einem oberen - im wesentlichen - waagerechten Siebbereich die Siebfläche mittels einer Schwing- und Rütteleinrichtung bewegt. Ein in der Siebschlaufe, quer zur Sieblaufrichtung, angeordnetes Ableitband fördert das durch das Sieb fallende Gut nach außen.

Bekannte Absiebvorrichtungen hierfür haben allesamt bislang den Nachteil, daß sich die Siebböden durch das feuchte Material relativ rasch zusetzen. Die Aufgabe der vorliegenden Erfindung ist daher darin zu sehen, eine geeignete Absiebvorrichtung zu schaffen, deren Siebboden durch geeigneten Aufbau und Zusatzmaßnahmen stets voll einsatzfähig bleibt.

Gelöst wird diese Aufgabe dabei durch die Merkmalskombination des Patentanspruches 1; die Unteransprüche beinhalten vorteilhafte Weiterbildungen und Details des neuen Grundsystems, das anhand der Zeichnungsskizzen im folgenden noch näher erläutert werden.

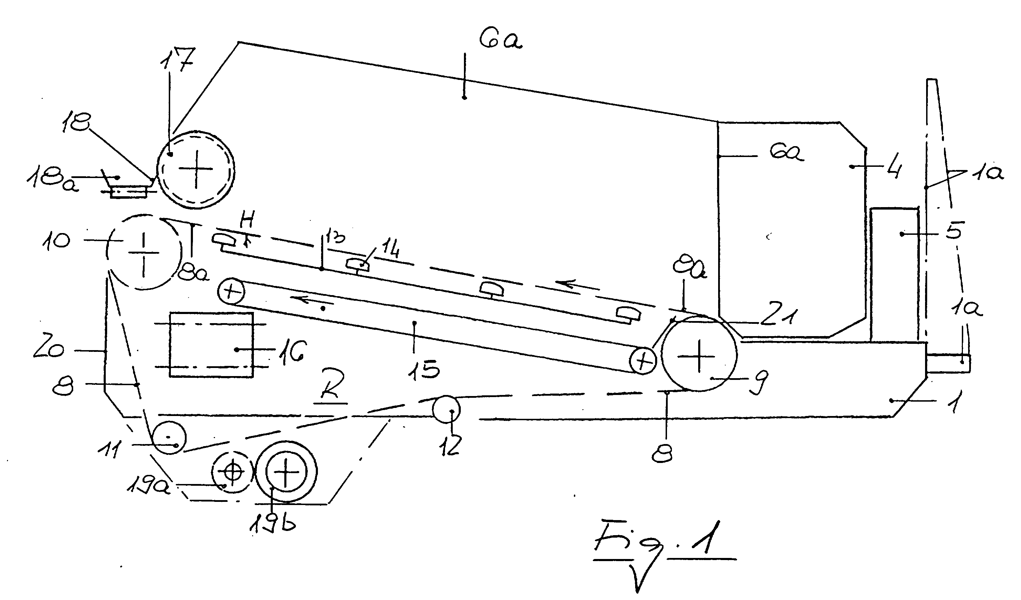

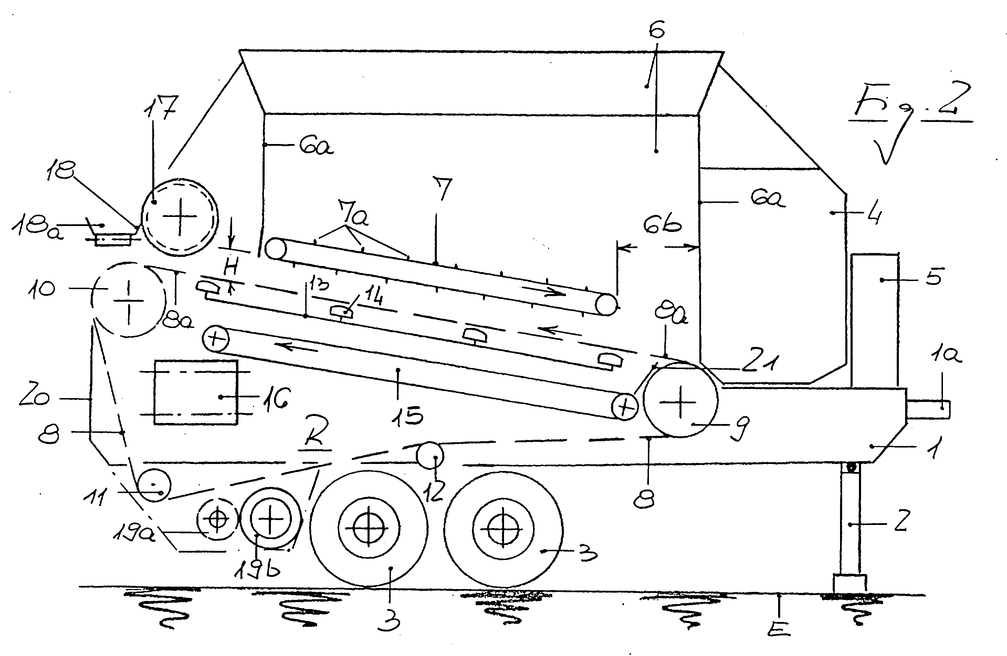

Fig. 1 zeigt weitestgehend schematisch die neue Siebvorrichtung als System im Längsschnitt und Fig. 2 zeigt eine Weiterbildung zu Fig. 1.

In seinem Grundaufbau besteht das neue Siebsystem nach Fig. 1 aus einem Gestell bzw. Grundrahmen 1 mit Anbauvorrichtung la, hydraulischem Antriebssystem 4, 5 und Siebkasten 6a.
Der bodenseitige Bereich des Siebkastens 6a wird durch ein umlaufendes Siebband 8 gebildet, mit Antriebsstation 10, entsprechenden Umlenkrollen 9, 11 und Spannrolle 12, und unmittelbar unterhalb des wirksamen Siebbandbereichs 8a ist eine kontinuierlich bzw. absatzweise wirkende Schlag- oder Rütteleinrichtung vorgesehen, bestehend beispielsweise aus mehreren, durch eine gemeinsame Antriebsstange 13 exzentrisch o.ä. angetriebenen, verteilt liegenden Klopfern 14. Diese Klopfer bewirken dabei, daß das abzusiebende Material auf dem Siebboden "hüpft", wodurch einem Zusetzen oder Verschmieren des Siebbodens entgegengewirkt wird.

Weiterhin sind unterhalb von Siebband 8a und Klopfeinrichtung 13, 14, zwei Austragförderer 15, 16, angeordnet zum Sammeln des durch den wirksamen Siebbandbereich 8a fallenden Materials und rechtwinklig dazu 16 zum Abführen des Materials seitlich nach außen.

Wichtig bei der neuen Vorrichtung ist zudem noch die Zuordnung eines sogenannten Windsichters 17 mit Abstreifer 18 und Sammelrinne samt Austragband 18a am Ende des wirksamen Bandbereichs 8a oberhalb der Antriebsrolle 10 zum Abführen von Fetzen aus Kunststoffolien.

Die Anordnung einer einschwenkbaren Siebband-Wechselstation 19a, 19b im unteren Bereich des Grundrahmens 1 erlaubt letztlich noch die Verwendung von unterschiedlich groß gelochten oder profilierten Siebbändern aus Stacheldrahtgeflecht oder Kunststoffmatten. Der Wechselvorgang geht dabei derart vonstatten, daß der zuletzt im Einsatz gewesene Siebboden an seiner quer zur Laufrichtung angeordneten Verbindungsstelle gelöst und mit seinem Ende auf die "Leerspule" 19a aufgewickelt wird, während gleichzeitig das ablaufende andere Bandende den Anfang des neuen Siebbandes von der Vorratsstation 19b mit ab- und auf das Rollensystem aufzieht.

Bei der Weiterbildung nach Fig. 2, die das neue Sieb als verfahrbares System mit Zugmaul la schwenkbarer Bodenstütze 2 und Laufrädern 3 darstellt, ist das Besondere die Zuordnung eines im wesentlichen vertikal gerichteten Einfüllschachtes 6, 6a zum wirksamen Siebbandbereich 8a der nach unten hin durch einen oberhalb des letzteren 8a, umlaufenden, mit Leisten oder Rippen 7a besetzten, als Dosiereinrichtung dienenden Kratzboden 7 bis auf einen Material-Durchlaßspalt 6b zwischen Kratzbodenende und benachbarter Einfüllschachtwand 6a abgeschlossen ist.

Wichtig für beide Systeme ist zudem noch, daß der wirksame Siebbandbereich 8a in Umlaufrichtung U leicht ansteigend verläuft und ebenso das mit Abstand darunter angeordnete, erste Austragförderband 15. Wegen der Siebneigung ist unterhalb des Förderbandes 15 noch genügend Platz für ein quer dazu verlaufenden Austragförderer 16.

Der mit Horizontalabstand "H" oberhalb des Siebbandes 8a verlaufende Kratzboden 7 ist dann sinnvollerweise in gleicher Art geneigt.

### Bezugszeichenliste

- 1: Grundrahmen
- 1a: Zugmaul (Anbausystem)
- 2: Stütze
- 3: Laufrad
- 4: hydraulischer Antrieb
- 5: " "
- 6: Einfüllschacht
- 6a: Seitenwand (Siebkasten)
- 6b: Durchlaßspalt
- 7: Kratzboden, Dosierelement
- 7a: Leisten oder Rippen
- 8: Siebboden, Siebband
- 8a: wirksamer Bandbereich
- 9: Umlenkrolle
- 10: Antriebsrolle
- 11: Umlenkrolle
- 12: Spannrolle, verstellbar
- 13: Antriebsstange
- 14: Klopfer
- 15: Förderband
- 16: Austragförderer
- 17: Windsichter
- 18: Abstreifer
- 18a: Sammelrinne mit Austragband
- 19a: Siebboden-Wechselstation
- 19b: " "
- 20: Abdeckgehäuse
- 21: Leitblech

- E: Erd- oder Hallenboden
- H: Höhenabstand Kratzboden (7) zu Siebband (8)
- R: vom Siebband umschlossener Raum
- U: Bandumlaufrichtung

## Patentansprüche

1. Absiebvorrichtung für Kompost und sonstige rottefähige, zerkleinerte organische Abfallmaterialien, bestehend aus einem ggf. auf Laufrädern (3) aufgesetzten Gestell oder Grundrahmen (1) mit Zugmaul (la) samt schwenkbarer Bodenabstützung (2), oder bestehend als anbaubare Vorrichtung, sowie einem hydraulischen Antriebssystem (4, 5) und Einfüllschacht (6, 6a), oder einem schachtähnlichen Zuführsystem,
gekennzeichnet durch
a. Der Siebboden wird durch ein umlaufendes Siebband (8) gebildet, mit Antriebsrolle (10), entsprechenden Umlenkrollen (9, 11) und Spannrolle (12) und ist im wirksamen Siebbandbereich (8a) in Umlaufrichtung (U) ebenso wie das mit Abstand darunter angeordnete erste Austragförderband (15) leicht ansteigend geneigt.
b. Unmittelbar unterhalb des wirksamen Siebbandbereichs (8a) ist eine kontinuierlich bzw. absatzweise wirkende Schlag- oder Rütteleinrichtung vorgesehen, bestehend aus mindestens einem, durch eine gemeinsame Antriebsstange (13) exzentrisch o.ä. angetriebenen, verteilt zur Siebfläche liegenden Klopfer (14).
c. Unterhalb von Siebband (8a) und Klopfeinrichtung (13, 14) sind zwei Austragförderbänder (15, 16) angeordnet zum Sammeln (15) des durch den wirksamen Siebbandbereich (8a) fallenden Materials und rechtwinklig dazu (16) zum Abführen des Materials seitlich nach außen.
d. Zuordnung eines sogenannten Windsichters (17) mit Abstreifer (18) am Ende des wirksamen Bandbereichs (8a) oberhalb der Antriebsrolle (10) zum Abführen von Fetzen aus Kunststoffolien.

2. Absiebvorrichtung nach Anspruch 1,
gekennzeichnet durch
Zuordnung einer Sammelrinne samt Austragband (18a) zum Abstreifer (18) des Windsichters (17).

3. Absiebvorrichtung nach den Ansprüchen 1 und 2,
gekennzeichnet durch
Anordnung einer einschwenkbaren Siebband-Wechselstation (19a, 19b) im unteren Bereich des Grundrahmens (1), unterhalb der Austragbänder (15, 16).

4. Absiebvorrichtung nach einem oder mehreren der vorhergehenden Ansprüche,
gekennzeichnet durch
Zuordnung eines im wesentlichen vertikal gerichteten Einfüllschachtes (6, 6a) zum wirksamen Siebbandbereich (8a) der nach unten hin durch einen oberhalb des letzteren (8a) umlaufenden, mit Leisten oder Rippen (7a) besetzten, als Dosiereinrichtung dienenden, Kratzboden (7), bis auf einen Material-Durchlaßspalt (6b) zwischen Kratzbodenende und benachbarter Einfüllschachtwandung (6a) abgeschlossen ist.

## Claims

1. Screening device for compost and other such compostable, comminuted organic waste materials, consisting of a frame structure or base frame, optionally placed on wheels (3), with a drawbar (1a) together with pivotable ground support (2), or existing as demountable device, as well as a hydraulic drive system (4, 5) and filling shaft (6, 6a), or a shaft-like feed system, characterised by
a. The screening base is formed by a circulating sieve belt (8) with drive roller (10), corresponding deflecting rollers (9, 11) and tensioning roller (12) and is inclined to be slightly rising in the effective sieve belt region (8a) in the direction (U) of circulation, as is the first discharge conveying belt (15) arranged thereunder at a spacing.
b. Provided directly below the effective sieve belt region (8a) is a continuously or intermittently acting beating or shaking equipment consisting of at least one beater (14) driven eccentrically or in similar manner by a common drive rod (13) and disposed spread out relative to the sieve surface.
c. Two discharge conveying belts (15, 16) are arranged below the sieve belt (8a) and beater equipment (13, 14) for the collection (15) of the material falling through the effective sieve belt region (8a) and, at right angles (16) thereto, for leading the material away laterally outwardly,
d) Association of a so-called air separator (17) with stripper (18) with the end of the effective belt region (8a) above the drive roller (10) for removal of shreds of synthetic material foils.

2. Screening device according to claim 1, characterised by association of a collecting channel together with discharge belt (18a) with the stripper (18) of the air separator.

3. Screening device according to claims 1 and 2, characterised by arrangement of a sieve belt change station (19a, 19b), which can be pivoted in, in the lower region of the base frame (1) below the discharge belts (15, 16).

4. Screening device according to one or more of the preceding claims, characterised by association of a substantially vertically oriented filling shaft (6, 6a) with the effective sieve belt region (8a), which is closed off downwardly by a scraper base (7), which circulates above the belt region (8a) and which is furnished with strips or ribs (7a) and serves as metering equipment, up to a material throughflow gap (6b) between scraper base end and adjacent filling shaft wall (6a).

## Revendications

1. Dispositif pour tamiser du compost et d'autres déchets organiques broyés pourrissables, composé d'un châssis ou bâti d'ensemble (1) posé le cas échéant sur des roues mobiles (3), avec une mâchoire de traction (1a) comprenant une béquille (2) escamotable, ou constitué comme dispositif pouvant être surajouté, ainsi que d'un système d'entraînement hydraulique (4, 5) et d'un puits de remplissage (6, 7) ou d'un système d'alimentation semblable à un puits , **caractérisé par:**
a) Le fond du tamis est formé par un tamis à bande (8) continue, avec une poulie de commande (10), des poulies de guidage correspondantes (9, 11) et une poulie de tension (12), et est légèrement incliné de façon montante dans le sens de circulation (U) dans la partie active du tamis à bande (8a), tout comme la première bande d'évacuation (15) placée en-dessous à une certaine distance.
b) Directement en-dessous de la partie active du tamis à bande (8a) est prévu un dispositif de battage ou de vibration agissant en continu ou en discontinu, composé d'au moins un battoir (14) commandé de manière excentrique ou de manière similaire par une tige d'entraînement commune (13), réparti sur la surface de tamisage.
c) En-dessous du tamis à bande (8a) et du dispositif de battage (13, 14) sont placées deux bandes d'évacuation (15, 16) pour la collecte (15) des déchets tombant au travers de la partie active du tamis à bande (8a) et à angle droit de la bande d'évacuation (16) pour évacuer les déchets latéralement vers l'extérieur.
d) L'adjonction d'un soi-disant séparateur à air (17) avec une racle (18) à l'extrémité de la partie active du tamis à bande (8a) au-dessus de la poulie de commande (10) pour l'évacuation de lambeaux de feuilles de plastique.

2. Dispositif pour tamiser du compost selon la revendication 1, **caractérisé par** l'adjonction d'une gouttière collectrice avec bande d'évacuation (18a) vers la racle (18) du séparateur à air (17).

3. Dispositif pour tamiser du compost selon les revendications 1 et 2, **caractérisé par** l'adjonction d'une station de changement du tamis à bande orientable (19a, 19b) dans la partie inférieure du bâti d'ensemble (1), en-dessous des bandes d'évacuation (15, 16).

4. Dispositif pour tamiser du compost selon l'une ou plusieurs des revendications précédentes, **caractérisé par** l'adjonction d'un puits de remplissage (6, 6a) dirigé essentiellement verticalement vers la partie active du tamis à bande (8a), puits qui, à l'exception d'une fente de passage de déchets (6b) entre l'extrémité du fond à raclettes et la paroi adjacente du puits de remplissage (6a), est fermé vers le bas par un fond à raclettes (7) circulant au-dessus de cette partie du tamis à bande (8a) équipé de baguettes ou de nervures (7a) et servant de dispositif de dosage.
